Europäisches Patentamt

European Patent Office

Office européen des brevets

(11) Publication number: **0 336 069 B1**

## EUROPEAN PATENT SPECIFICATION

(45) Date of publication of patent specification: **12.05.93**

(51) Int. Cl.⁵: **C10K 1/20, B01D 53/34, B01D 53/02**

(21) Application number: **89101934.1**

(22) Date of filing: **03.02.89**

(54) Adsorbent composition for malodor gases.

(30) Priority: **05.02.88 JP 26447/88**
**24.05.88 JP 126154/88**

(43) Date of publication of application:
**11.10.89 Bulletin 89/41**

(45) Publication of the grant of the patent:
**12.05.93 Bulletin 93/19**

(84) Designated Contracting States:
**DE FR GB**

(56) References cited:
DE-A- 2 029 074     DE-A- 2 650 711
DE-C- 159 136       FR-A- 369 046
FR-A- 2 292 512     US-A- 2 956 861
US-A- 3 382 044     US-A- 3 441 370

(73) Proprietor: **TAYCA CORPORATION**
**3-47 Funamachi 1-Chome, Taisho-Ku**
**Osaka(JP)**

(72) Inventor: **Kamiya, Kazuo**
**1-8 Hiramatsu 7-chome**
**Itami-shi(JP)**
Inventor: **Suzuku, Motohiro**
**12-8 Benten 3-chome**
**Minato-ku, Osaka(JP)**
Inventor: **Nagai, Yukio**
**14-1-208 Harumidai 3-cho**
**Sakai-shi(JP)**
Inventor: **Tsuhako, Mitsutomo**
**5-12 Nagatacho**
**Nishinomiya-shi(JP)**
Inventor: **Kobayashi, Masaki**
**18-4 Tsukimiyama**
**2-chome Takarazuka-shi(JP)**

(74) Representative: **Kinzebach, Werner, Dr. et al**
**Patentanwälte Reitstötter, Kinzebach und**
**Partner Sternwartstrasse 4 Postfach 86 06 49**
**W-8000 München 86 (DE)**

**Description**

This invention relates to the use of a zinc oxide – hydroxide complex for removing malodor gases and to an adsorbent composition for malodor gases such as hydrogen sulfide, mercaptans and other gaseous malodor substances.

Heretofore, various compositions have been known and used for selectively adsorbing malodor gases such as hydrogen sulfide, mercaptans and other acidic malodor gases. They include ferric hydroxide, ferric sulfate, zeolite, activated carbon and the like. These known deodorant compositions are generally dark in color or change dark when adsorbing sulfur – containing gases such as hydrogen sulfide. Accordingly, their use is limited to those cases where the dark color is acceptable. Some of known adsorbents such as zeolite are bright in color but their capability of adsorbing malodorants is relatively weak.

US – A – 3 441 370 discloses a process for removing sulphur compounds from gases containing steam wherein the gas stream is passed over a bed of zinc oxide having a surface area of above 30 $m^2$ per gram.

US – A – 2 956 861 relates to a process for the preparation of metallic oxide and in particular of zinc oxide in a highly active form. Due to the preparation process the zinc oxide is present in a mixture with zinc carbonate. The zinc oxide is used in the desulphurization of gas.

Gmelins, Handbuch der Anorganischen Chemie, 8th edition, volume "zinc", pages 772 and 773 discloses the preparation of zinc oxide by heating amorphous zinc hydroxide at a temperature of 200 or 280 °C. The zinc oxide is used as a catalyst for methanol decomposition.

Thus, needs exist for an adsorbent composition for malodor gases which is bright in color and exhibits high capability of selectively adsorbing such malodor gases.

The invention relates to the use of a zinc oxide – hydroxide complex which is obtainable by the steps of reacting a water – soluble zinc salt with a substantially stoichiometric amount of alkali metal or ammonium hydroxide in an aqueous reaction medium to form zinc hydroxide, recovering and heating the zinc hydroxide at a temperature from about 100 °C to about 400 °C, for removing malodor gases.

The above zinc oxide – hydroxide complex is bright in color and capable of efficiently adsorbing a variety of malodor gases such as hydrogen sulfide, mercaptans and other acidic malodor gases.

The present invention also provides an adsorbent composition for malodor gases comprising said zinc oxide – hydroxide complex in admixture with aluminum dihydrogen tripolyphosphate. This composition is also bright in color and capable of efficiently adsorbing, in addition to acidic malodor gases, a variety of basic malodor gases such as ammonia.

DETAILED DESCRIPTION OF THE INVENTION

Zinc hydroxide may be produced, as is well – known, by reacting a water – soluble zinc salt with an alkali. As a zinc salt, chloride, sulfate, nitrate and mixtures of these salts may be mentioned. As an alkali, sodium hydroxide, potassium hydroxide, lithium hydroxide and mixtures thereof may be mentioned. Aqueous solutions of ammonia, spent alkali or ammonium solutions used for cleaning discharge gases may also be used as alkali. The reaction may be carried out by gradually adding an aqueous solution of alkali into an aqueous solution of zinc salt with stirring. Preferably, the ratio of the alkali to the zinc salt is substantially stoichiometric. In other words, about 1.6 to 2.4 moles of hydroxide ions are used per mole of zinc ions. The final pH of the reaction mixture lies between 6 and 12, preferably between 6 and 8. Because of amphoteric nature of zinc hydroxide, excessive alkalinity should be avoided to prevent the hydroxide from redissolving in the reaction mixture as zinc acid ions.

The resulting precipitate is recovered by filtration and washed with water. Several polymorphs of zinc hydroxide are known. It has been reported in the literature that they are unstable and converted to zinc oxide at a temperature above 125°C. In our experiments, it was demonstrated in the X – ray diffraction that heating the zinc hydroxide gave an oxide – hydroxide complex at a temperature between 100°C and 450°C while oxide was the main product at a temperature above 500°C.

It was then discovered that the zinc oxide – hydroxide complex thus formed was useful as a selective adsorbent of acidic malodor gases. The adsorbability of malodor gases may be maximumized by heating the zinc hydroxide at a temperature between 200°C and 400°C for a length of time sufficient to reach a constant weight.

The complex thus produced is white, does not change dark when adsorbing for example, hydrogen sulfide, and is stable in the atmosphere and against heat. These beneficial properties make the complex useful as a deodorant composition to be added plastics.

The adsorbability of malodor gases possessed by the zinc oxide – hydroxide complex is far greater than zinc oxide or zinc hydroxide alone or their blends. Although it is not intended to be bound to a particular theory, it is believed that this is because the complex is more active as a solid base than as a simple oxide or hydroxide.

In a further embodiment of the invention, the zinc oxide − hydroxide complex is admixed with aluminum dihydrogen tripolyphosphate to provide an adsorbent composition for both acidic and basic malodor gases.

Aluminum dihydrogen tripolyphosphate is known as a solid acid capable of adsorbing basic malodor gases such as ammonia and amines. Because of its bright color, the composite deodorant composition is also bright. The proportion of aluminum dihydrogen tripolyphosphate relative to the zinc oxide − hydroxide complex may vary in a wide range depending upon the nature of malodor gases and their relative concentrations. Usually the ratio of the zinc oxide − hydroxide complex to aluminum dihydrogen tripolyphosphate ranges between 90:10 and 10:90, preferably between 75:25 and 25:75 by weight.

The complex of the present invention may be used in a powder form but it is preferable to pelletize the it by kneading with a small amount of a binder solution, dividing the resulting mass into desired shape and size, and drying the resulting pellets. Starch, CMC, polyvinyl alcohol and other water − soluble binder materials may be used for this purpose.

The deodorant composition may also be blended with a variety of synthetic resins such as polyethyl − ene, polypropylene, polyvinyl chloride, polystyrene, polyethyleneterephthalate, polyacrylonitrile, poly − methylmethacrylate and the like. Usually 0.5 to 20 % by weight of the resin of the deodorant composition is blended. The resulting blend may be shaped into granules, films, fibers and other desired forms. Foam products may be produced by impregnating the blend with liquid propane or butane and then heating in a closed mold. Shaped plastic materials may be used as deodorant for domestic and industrial uses. For example, films may be used for fabricating diapers, sanitary bags, bed sheet covers and the like. These films may be provided with perforations by punching or electric discharge. Foamed products may be used as deodorant to be placed in refrigerators, cars, toilets and the like. Fabrics made from fibers containing the deodorant composition may find the same use as films.

The following examples are further illustrative of the invention.

Example 1

100g of zinc chloride (reagent grade) was dissolved in 500 ml of water. The solution was neutralized with aqueous ammonia (five fold dilution of 28 % ammonia) to pH 7.0 with stirring. The resulting white precipitate was suction filtered, washed with 2 liter of hot water, and then heated at 100˚C for 16 hours. The product showed the pattern of a zinc oxide − hydroxide complex by X − ray diffraction.

Examples 2 − 4

The process of Example 1 was repeated except that the heat treatment of zinc hydroxide was carried out at 200˚C (Example 2), 300˚C (Example 3), and 400˚C (Example 4), respectively.

The products showed the same X − ray diffraction pattern as the product of Example 1.

Example 5

100g of zinc sulfate (reagent grade) was dissolved in 500 ml of water. The solution was neutralized with the diluted aqueous ammonia to pH 6.8 with stirring. The resulting white precipitate was suction filtered, washed with 1 liter of hot water, and then heated at 300˚C for 16 hours. The product showed the same X − ray diffraction pattern as the product of Example 1.

Example 6

The process of Example 5 was repeated except that 5 N aqueous solution of sodium hydroxide was used for neutralization. The product showed the same X − ray diffraction pattern as the product of Example 1.

Example 7

The process of Example 5 was repeated except that the precipitate was directly heat treated without washing. The product showed the same X − ray diffraction pattern as the product of Example 1.

Example 8

The process of Example 1 was repeated except that the precipitate of zinc hydroxide was heated at 70°C for 16 hours. The product was identified as zinc hydroxide by its X−ray diffraction pattern.

Example 9

The process of Example 1 was repeated except that the precipitate of zinc hydroxide was heated at 500°C for 16 hours. The product was identified as zinc oxide by its X−ray diffraction pattern.

Hydrogen Sulfide Adsorption Test

The products of Examples 1 through 9 were tested for their capability of adsorbing hydrogen sulfide gas.

1.0 g of each sample was placed in a plastic bag. The bag was inflated with 3 liters of a standard $H_2S$ gas (102 ppm of $H_2S$ in $N_2$ gas, sold by Seitetsu Kagaku Co., Ltd.), sealed and placed at room temperature. The change in $H_2S$ concentration in the gas was measured with time using Kitagawa's gas sensor tube of Model hydrogen sulfide SB (detection limit 0.3 ppm). Percents adsorption were calculated by the following equation.

$$\text{Percent adsorption} = \frac{102 - \text{measured value (ppm)}}{102} \times 100$$

At the same time, organoleptic tests of the treated gases were performed for the odor of $H_2S$. The results obtained are shown in Table I below.

Table I

| Adsorption of $H_2S$ and Organoleptic Test | | | | | | |
|---|---|---|---|---|---|---|
| Sample | Time (minute) | | | | | |
| | 5 | | 10 | | 30 | |
| Ex. 1 | >99.7 | + | 100 | ± | 100 | − |
| Ex. 2 | >99.7 | + | 100 | ± | 100 | − |
| Ex. 3 | >99.7 | + | 100 | − | 100 | − |
| Ex. 4 | >99.7 | + | 100 | ± | 100 | − |
| Ex. 5 | >99.7 | + | 100 | ± | 100 | − |
| Ex. 6 | 90.0 | + + | 100 | ± | 100 | − |
| Ex. 7 | 91.0 | + + | 99 | + | 100 | − |
| Ex. 8 | 25 | + + | 35 | + | 65 | + + |
| Ex. 9 | 40 | + + | 75 | + + | 98 | + + |
| Activated Carbon | 31 | + + | 60 | + + | 90 | + + |
| Zinc oxide | 70 | + + | 90 | + + | 95 | + + |
| Schedule of Organoleptic Test of $H_2S$ : | | | | | | |
| + + : Considerably strong odor | | | | | | |
| + : Strong odor | | | | | | |
| ± : Slight odor | | | | | | |
| − : Substantially no odor | | | | | | |

Methylmercaptan Adsorption Test

A similar test was performed for the adsorption of methylmercaptan by the products of Example 2 in comparison with activated carbon. The standard gas used in this test contained 12.1 ppm of methylmercaptan in $N_2$ gas and the gas sensor was Kitagawa's gas sensor tube of Model methylmercaptan S (detection limit 1 ppm). The residual concentrations of methylmercaptan in the treated gases were measured against time. The results obtained are shown in Table II below.

Table II

| Adsorption of Methylmercaptan | | | |
|---|---|---|---|
| Sample | Time (minute) | | |
| | 30 | 60 | 90 |
| Ex. 2 | 2 ppm | < 1 ppm | < 1 ppm |
| Activated carbon | 2 ppm | < 1 ppm | < 1 ppm |

As shown in Table II, the zinc oxide−hydroxide complex of the present invention is also effective for adsorbing methylmercaptan which is a typical malodor gas.

Example 10

The zinc oxide−hydroxide complex of Example 2 was blended with aluminum dihydrogen tripolyphosphate (K−FRESH # 100P, sold by Teikoku Kako Co., ltd.) at varying proportions.

A plastic bag containing 1.0 g of each sample was inflated with 1.5 liters of a standard $NH_3$ gas (170 ppm of $NH_3$ in $N_2$ gas) and 1.5 liters of a standard $H_2S$ gas (204 ppm of $H_2S$ in $N_2$ gas) successively, sealed and placed at room temperature. The change of $NH_3$ and $H_2S$ concentrations in the gas was measured with time using Kitagawa's gas sensor tube and the length of time at which the levels of $NH_3$ and $H_2S$ decreased below their detection limits respectively.

The results obtained are shown in Table III below.

Table III

| Adsorption of $NH_3$ and $H_2S$ | | | | |
|---|---|---|---|---|
| Run No. | Aluminum Dihydrogen Tripolyphosphate (wt. %) | Zn (OH)$_2$/ZnO Complex (wt. %) | Adsorption time (minute) | |
| | | | $NH_3$ | $H_2O$ |
| 1 | 100 | − | 1.0 | − |
| 2 | 75 | 25 | 1.0 | 15 |
| 3 | 50 | 50 | 1.0 | 3 |
| 4 | 25 | 75 | 1.0 | 3 |
| 5 | − | 100 | − | 1 |
| 6 | 25 | 75(ZnO) | 1.0 | 15 |

Example 9

Samples of Run No. 1 through No. 6 of Example 8 were incorporated into polyester fibers, polyethylene film and polystylene foam sheet, respectively. The resulting plastic materials were tested for adsorption of $NH_3$ and $H_2S$ using the same method as Example 8.

The results obtained are shown in Table IV through VI below.

5

Table IV

| Adsorption of $NH_3$ and $H_2S$ (Polyester fiber) | | |
|---|---|---|
| Adsorbent Run No. | Adsorption time (hour) | |
| | $NH_3$ | $H_2O$ |
| 1 | 5.3 | – |
| 2 | 5.3 | 53 |
| 3 | 5.2 | 16 |
| 4 | 5.3 | 16 |
| 5 | – | 5 |
| 6 | 5.3 | 80 |
| Adsorbent content = 2.5 wt. % <br> Amount of fibers = 20 g / bag | | |

Table V

| Adsorption of $NH_3$ and $H_2S$ (polythene film) | | |
|---|---|---|
| Adsorbent Run No. | Adsorption time (hour) | |
| | $NH_3$ | $H_2S$ |
| 1 | 6.5 | – |
| 2 | 6.5 | 66 |
| 3 | 6.5 | 20 |
| 4 | 6.5 | 20 |
| 5 | – | 6.5 |
| 6 | 6.5 | 99 |
| Adsorbent content = 3.0 wt. % <br> Amount of film = 1.5 g / bag | | |

Table VI

| Adsorption of $NH_3$ and $H_2S$ (Polystyrene foam) | | |
|---|---|---|
| Adsorbent Run No. | Adsorption time (hour) | |
| | $NH_3$ | $H_2S$ |
| 1 | 1.0 | – |
| 2 | 1.0 | 10.0 |
| 3 | 1.0 | 3.0 |
| 4 | 1.0 | 3.0 |
| 5 | – | 1.0 |
| 6 | 1.0 | 15.0 |
| Adsorbent content = 10.0 % <br> Expansion ratio = 20 times <br> Amount of polystyrene foam = 2.0 g / bag | | |

EP 0 336 069 B1

**Claims**

1. The use of a zinc oxide – hydroxide complex which is obtainable by the steps of reacting a water – soluble zinc salt with a substantially stoichiometric amount of alkali metal or ammonium hydroxide in an aqueous reaction medium to form zinc hydroxide, recovering and heating the zink hydroxide at a temperature from about 100˚C to about 400˚C, for removing malodor gases.

2. The use according to claim 1 wherein said temperature is from about 200˚C to about 400˚C.

3. An adsorbent composition for malodor gases comprising a zink oxide – hydroxide complex as defined in claim 1 or 2 in admixture with aluminium dihydrogen tripolyphosphate.

4. The adsorbent composition according to claim 3 were in the ratio of the zinc oxide – hydroxide complex to aluminium dihydrogen tripolyphosphate is between 90:10 and 10:90 weight.

5. The adsorbent composition according to claim 4 wherein said ratio is between 75:25 and 25:75 by weight.

6. A plastic material containing the zinc oxide – hydroxide complex as defined in claim 1.

7. A plastic material containing the zinc oxide – hydroxide complex as defined in claim 2.

8. A plastic material containing the adsorbent composition of claim 3.

9. A plastic material containing the adsorbent composition of claim 4.

10. A plastic material containing the adsorbent composition of claim 5.

**Patentansprüche**

1. Verwendung eines Zinkoxidhydroxid – Komplexes, der erhältlich ist durch Umsetzung eines wasser – löslichen Zinksalzes mit einer im wesentlichen stöchiometrischen Menge an Alkalimetall – oder Ammoniumhydroxid in einem wässrigen Reaktionsmedium unter Bildung von Zinkhydroxid, Gewinnung und Erhitzen des Zinkhydroxids bei einer Temperatur von etwa 100˚C bis etwa 400˚C, zur Entfernung übelriechender Gase.

2. Verwendung nach Anspruch 1 worin die Temperatur etwa 200˚C bis etwa 400˚C beträgt.

3. Adsorbierende Zusammensetzung gegen übelriechende Gase, die einen Zinkoxidhydroxid – Komplex nach Anspruch 1 oder 2 in Mischung Aluminiumdihydrogen – tripolyphosphat enthält.

4. Adsorbierende Zusammensetzung nach Anspruch 3, worin das Gewichtsverhältnis von Zinkoxidhydroxid – Komplex zu Aluminium – dihydrogen – tripolyphosphat zwischen 90:10 und 10:90 Gewichtsanteil liegt.

5. Adsorbierende Zusammensetzung nach Anspruch 4, worin das Gewichtsverhältnis zwischen 75:25 und 25:75 liegt.

6. Kunststoffmaterial, das den Zinkoxidhydroxid – Komplex nach Anspruch 1 enthält.

7. Kunststoffmaterial, das den Zinkoxidhydroxid – Komplex nach Anspruch 2 enthält.

8. Kunststoffmaterial, das die adsorbierende Zusammensetzung nach Anspruch 3 enthält.

9. Kunststoffmaterial, das die adsorbierende Zusammensetzung nach Anspruch 4 enthält.

10. Kunststoffmaterial, das die adsorbierende Zusammensetzung nach Anspruch 5 enthält.

**Revendications**

1. Utilisation d'un complexe oxyde – hydroxyde de zinc qui peut être obtenu par les étapes consistant à faire réagir un sel de zinc soluble dans l'eau avec une quantité pratiquement stoechiométrique de métal alcalin ou d'hydroxyde d'ammonium dans un milieu de réaction aqueux pour former de l'hydroxyde de zinc, à récupérer et à chauffer l'hydroxyde de zinc à une température d'environ 100 ˚C à environ 400 ˚C pour éliminer les gaz malodorants.

2. Utilisation selon la revendication 1, dans laquelle cette température est d'environ 200 ˚C à environ 400 ˚C.

3. Composition d'adsorbant pour les gaz malodorants comprenant un complexe oxyde – hydroxyde de zinc selon les revendications 1 ou 2 en mélange avec un dihydrogéno – tripolyphosphate d'aluminium.

4. Composition d'adsorbant selon la revendication 3, dans laquelle le rapport du complexe oxyde – hydroxyde de zinc au dihydrogéno – tripolyphosphate d'aluminium est compris entre 90:10 et 10:90 en poids.

5. Composition d'adsorbant selon la revendication 4, dans laquelle ce rapport est compris entre 75:25 et 25:75 en poids.

6. Matière plastique contenant le complexe oxyde – hydroxyde de zinc selon la revendication 1.

7. Matière plastique contenant le complexe oxyde – hydroxyde de zinc selon la revendication 2.

8. Matière plastique contenant la composition d'adsorbant selon la revendication 3.

9. Matière plastique contenant la composition d'adsorbant selon la revendication 4.

10. Matière plastique contenant la composition d'adsorbant selon la revendication 5.